# EUROPEAN PATENT APPLICATION

(11) **EP 3 357 556 A1**
(43) Date of publication of application: **08.08.2018**
(21) Application number: 17811177.9
(22) Date of filing: 03.08.2017
(51) Int. Cl.: B01D 50/00, B01D 53/50, B01D 53/80, B01D 53/78

(54) **DUST REMOVAL AND DESULFURIZATION MULTIPLIER AND WET DESULFURIZATION DEVICE**

(30) Priority: 07.12.2016 CN 201611114593
(71) Applicant: BEIJING ZHONGNENG NUOTAI ENERGY SAVING AND ENVIRONMENTAL PROTECTION CO., LTD., Beijing 100160 (CN)
(72) Inventor: FAN, Jing, Beijing 100160 (CN); ZHAO, Yuncai, Beijing 100160 (CN)
(74) Representative: Heimdal, Pär
(86) International application number: PCT/CN2017/095802
(87) International publication number: WO 2018/103354

(57) **Abstract**

The present application provides a dust removal and desulfurization enhancer and a wet desulfurization device. The dust removal and desulfurization enhancer comprises a gas cyclone cylinder and a blind cylinder arranged inside the gas cyclone cylinder; wherein a gas cyclone blade is arranged on the blind cylinder, when flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder. According to the present application, efficiency of dust removal and desulfurization is high, and project construction is eased, and thus reconstruction cost and operation cost are low.

## Description

### TECHNICAL FIELD

The present application relates to the technical field of wet desulfurization, and in particular, relates to a dust removal and desulfurization enhancer and a wet desulfurization device.

### BACKGROUND

Desulfurization refers to making sulfur elements to in coals to solids by using the calcium-based method or the like method to prevent generation of SO₂ during combustion. At present, the desulfurization methods may be categorized into wet desulfurization method, dry desulfurization method, and semi-dry (semi-wet) desulfurization method according to the wet or dry state of absorbers and desulfurization products during the desulfurization process. The wet desulfurization technology removes sulfur and processes desulfurization products in the wet state by using a solution or slurry containing an absorber. This method is widely applied in pollution treatment of furnace flue gases and industrial exhaust gases because of high desulfurization speed, simple equipment, high desulfurization efficiency and the like advantages.

At present, a variety of treatment technologies are available for flue gases and industrial exhaust gases. The matured and representative technologies include: limestone-gypsum method, ammonia method, dual-alkali method and the like wet desulfurization method for treating sodium dioxide (SO₂) pollution. With respect to the current super clean emission requirements, emission of SO₂ reaches 35 mg/Nm3, and emission of dusts reaches 5 mg/Nm3. Common wet desulfurization technologies generally employs a solution of dual absorption towers connected on series or a single absorption further provided with a spray layer. These reconstruction solutions takes a long project period, occupies a large site or plant, and needs a high construction cost and a high operation cost. In addition, reconstruction may not be carried out for some projects due to the problem of sites or plants.

### SUMMARY

In view of the above, the present application provides a dust removal and desulfurization enhancer and a wet desulfurization device, which achieves a high efficiency of dust removal and desulfurization, and facilitates project reconstruction. Therefore, the reconstruction cost and operation cost are low.

The present application provides a dust removal and desulfurization enhancer, comprising a gas cyclone cylinder and a blind cylinder arranged inside the gas cyclone cylinder; wherein a gas cyclone blade is arranged on the blind cylinder, when flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder.

In a specific embodiment of the present application, the gas cyclone cylinder comprises an inner gas cyclone cylinder and an outer gas cyclone cylinder; wherein the inner gas cyclone cylinder is arranged inside the outer gas cyclone cylinder, and the blind cylinder is arranged inside the inner gas cyclone cylinder.

In a specific embodiment of the present application, the inner gas cyclone cylinder and the outer gas cyclone cylinder are concentrically arranged, and the blind cylinder and the inner gas cyclone cylinder are concentrically arranged.

In a specific embodiment of the present application, the sieve plate is adapted to at least one gas cyclone cylinder.

In a specific embodiment of the present application, the gas cyclone blade comprises an outer gas cyclone blade and an inner gas cyclone blade; wherein the inner gas cyclone blade is installed on the bind cylinder, the outer gas cyclone blade is installed on the inner gas cyclone cylinder, and a rotation direction when the flue gas passes through the inner gas cyclone blade is opposite to a rotation direction when the flue gas passes through the outer gas cyclone blade.

The present application provides a wet desulfurization device, comprising an absorption tower, an in-tower slurry pond, a flue gas inlet and a flue gas outlet, characterized in that at least one dust removal and desulfurization enhancer layer is installed in the wet desulfurization device, the dust removal and desulfurization enhancer layer comprising at least one dust removal and desulfurization enhancer; wherein the dust removal and desulfurization enhancer comprises a gas cyclone cylinder and a blind cylinder arranged inside the gas cyclone cylinder; wherein a gas cyclone blade is arranged on the blind cylinder, when flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder.

In a specific embodiment of the present application, the gas cyclone cylinder comprises an inner gas cyclone cylinder and an outer gas cyclone cylinder; wherein the inner gas cyclone cylinder is arranged inside the outer gas cyclone cylinder, and the blind cylinder is arranged inside the inner gas cyclone cylinder.

In a specific embodiment of the present application, the inner gas cyclone cylinder and the outer gas cyclone cylinder are concentrically arranged, and the blind cylinder and the inner gas cyclone cylinder are concentrically arranged.

In a specific embodiment of the present application, the sieve plate is adapted to at least one gas cyclone cylinder.

In a specific embodiment of the present application, the gas cyclone blade comprises an outer gas cyclone blade and an inner gas cyclone blade; wherein the inner gas cyclone blade is installed on the bind cylinder, the outer gas cyclone blade is installed on the inner gas cyclone cylinder, and a rotation direction when the flue gas passes through the inner gas cyclone blade is opposite to a rotation direction when the flue gas passes through the outer gas cyclone blade.

In a specific embodiment of the present application, the wet desulfurization device further comprises a shower layer, wherein the dust removal and desulfurization enhancer is arranged 1 to 3 meters below the shower layer.

In a specific embodiment of the present application, the number of dust removal and desulfurization enhancers is determined according to a diameter of the absorption tower.

In a specific embodiment of the present application, a gap between the dust removal and desulfurization enhancers and a gap between the dust removal and desulfurization enhancer and an inner wall of the absorption tower are sealed using a limiting and fixing bind plate.

As seen from the above technical solutions, the present application comprises a gas cyclone cylinder and a blind cylinder arranged inside the gas cyclone cylinder; wherein a gas cyclone blade is arranged on the blind cylinder. When flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder. Therefore, according to the present application, since the slurry severely collides with the flue gas within a relatively enclosed space between the gas cyclone cylinder and the sieve plate, a stronger mass transfer effect may be created, and the dusts and liquid droplets may be effectively prevented from splashing out of the gas cyclone cylinder. According to the present application, efficiency of dust removal and desulfurization is high, and project construction is eased, and thus reconstruction cost and operation cost are low.

### BRIEF DESCRIPTION OF THE DRAWINGS

To describe technical solutions according to the embodiments of the present application or in the prior art, drawings that are to be referred for description of the embodiments or the prior art are briefly described hereinafter. Apparently, the drawings described hereinafter merely illustrate some embodiments of the present application. Persons of ordinary skill in the art may also derive other drawings based on the drawings described herein.
FIG. 1 is a schematic structural view of a dust removal and desulfurization enhancer according to a specific embodiment of the present application;
FIG. 2 is a schematic structural view of a wet desulfurization device according to a specific embodiment of the present application; and
FIG. 3 is a top view of a wet desulfurization device according to a specific embodiment of the present application.

### DETAILED DESCRIPTION

The present application comprises a gas cyclone cylinder and a blind cylinder arranged inside the gas cyclone cylinder; wherein a gas cyclone blade is arranged on the blind cylinder. When flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder. Therefore, according to the present application, since the slurry severely collides with the flue gas within a relatively enclosed space between the gas cyclone cylinder and the sieve plate, a stronger mass transfer effect may be created, and the dusts and liquid droplets may be effectively prevented from splashing out of the gas cyclone cylinder. According to the present application, efficiency of dust removal and desulfurization is high, and project reconstruction is eased, and thus reconstruction cost and operation cost are low.

Definitely, the implementation of any technical solution of the present application does not need to achieve all the above advantages.

To make a person skilled in the art better understand the technical solutions of the present application, the technical solutions in the embodiments of the present application are described clearly and completely with reference to the accompanying drawings in the embodiments of the present application. Apparently, the described embodiments are merely some of rather than all of the embodiments of the present application. Based on the embodiments of the present application, all other embodiments derived by persons of ordinary skill in the art without any creative efforts shall fall within the protection scope of the present application.

Specific implementations of the present application are further described hereinafter with reference to drawings of the present application.

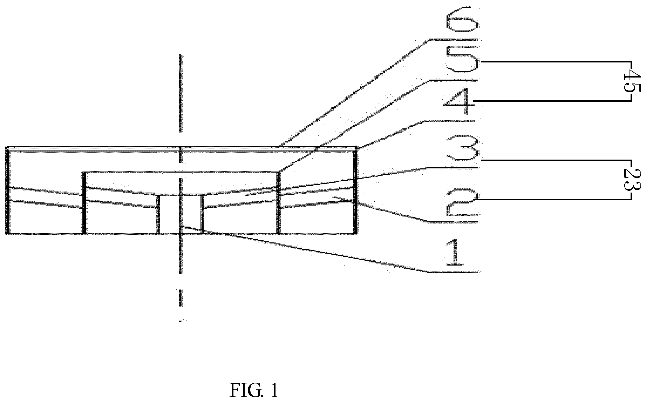

Referring to FIG. 1, one specific embodiment of the present application provides a dust removal and desulfurization enhancer, comprising a gas cyclone cylinder 45 and a blind cylinder 1 arranged inside the gas cyclone cylinder 45; wherein a gas cyclone blade 23 is arranged on the blind cylinder 1, when flue gas passes through the dust removal and desulfurization enhancer, gas-liquid collision and rotational flow are generated at the gas cyclone blade 23 and on a cylinder wall of the gas cyclone cylinder 45, and a sieve plate 6 with a predetermined aperture ratio is arranged above the gas cyclone cylinder 45, the sieve plate 6 sealing liquid droplets within the gas cyclone cylinder 45.

According to the present application, by using kinetic energy of the flue gas in the absorption tower, when the flue gas passes through the dust removal and desulfurization enhancer, gas-liquid collisions generated between the gas cyclone blade 23 and the cylinder wall of the gas cyclone cylinder 45 causes the tiny dusts and slurries in the flue gas to collide with each other, such that the tiny dusts and slurries are aggregated to form larger liquid droplets. Afterwards, the larger droplets are captured by a liquid membrane on the surface of the gas cyclone cylinder 45 to remove the dust particles. In addition, since severe rotational flow is generated when the flue gas passes through the gas cyclone blade 23, the kinetic energy of the flue gas is increased, and thus the flue gas much more severely collide with the spray slurry. The liquid membrane of the slurry is more easily to be broken through, such that the removing reaction of SO₂ is speeded up, and thus desulfurization efficiency is improved.

Since a sieve plate 6 with a predetermined aperture ratio is arranged above the gas cyclone cylinder 45, such that a large number of liquid droplets are sealed within the gas cyclone cylinder 45. Since the slurry severely collides with the flue gas within a relatively enclosed space between the gas cyclone cylinder 45 and the sieve plate 6, a stronger mass transfer effect may be created, and the dusts and liquid droplets may be effectively prevented from splashing out of the gas cyclone cylinder. Therefore, according to the present application, efficiency of dust removal and desulfurization is high, and project reconstruction is eased, and thus reconstruction cost and operation cost are low.

In a specific embodiment of the present application, the gas cyclone cylinder 45 comprises an inner gas cyclone cylinder 5 and an outer gas cyclone cylinder 4; wherein the inner gas cyclone cylinder 5 is arranged inside the outer gas cyclone cylinder 4, and the blind cylinder 1 is arranged inside the inner gas cyclone cylinder 5.

Specifically, the inner gas cyclone cylinder 5 and the outer gas cyclone cylinder 4 are concentrically arranged.

The blind cylinder 1 and the inner gas cyclone cylinder 5 are concentrically arranged.

The sieve plate 6 is adapted to at least one gas cyclone cylinder 45. For example, it may be such designed that a sieve plate 6 is arranged above each gas cyclone cylinder 45, or a sieve plate 6 is arranged above a plurality of gas cyclone cylinders 45 forming a gas cyclone cylinder layer, wherein a sieve plate 6 may be arranged above the gas cyclone cylinders 45 in any quantity in the gas cyclone cylinder layer.

The gas cyclone blade 23 comprises an outer gas cyclone blade 2 and an inner gas cyclone blade 3; wherein the inner gas cyclone blade 3 is installed on the bind cylinder 1, the outer gas cyclone blade 2 is installed on the inner gas cyclone cylinder 5, and a rotation direction when the flue gas passes through the inner gas cyclone blade 3 is opposite to a rotation direction when the flue gas passes through the outer gas cyclone blade 2.

Since the rotation direction of the inner gas cyclone blade 3 is opposite to the rotation direction of the outer gas cyclone blade 2, the flue gases flowing through the inner and outer gas cyclone blades reversely rotate in two directions and thus the collisions therebetween are more severe.

The enhancement-mode dust removal and desulfurization enhancer in the present application may achieve the following beneficial effects:
1. Dust removal efficiency is high. According to the present application, such tiny particles as the tiny liquid droplets, tiny dust particles, aerosols and the like in the flue gas may be effectively removed. When the flue gas experiencing spraying and purification passes through the dust removal and desulfurization enhancer according to the present application, severe gas-liquid rotations and disturbances are formed within an enclosed space between the gas cyclone cylinder and the sieve plate, such that tiny liquid droplets, tiny dust particles, aerosols and the like tiny particles in the flue gas collide with each other and are aggregated to form larger liquid droplets, and the larger liquid droplets are captured by the liquid membrane on the surface of the gas cyclone cylinder to remove the tiny particles. In this way, efficiency of desulfurization of the tiny particles in the flue gas is improved.
2. Desulfurization efficiency is high. According to the present application, desulfurization efficiency may be improved with no need of arranging an in-tower shower layer, and the present application achieves a better effect than the effect achieved by the in-tower shower layer. In addition, as compared with the configuration where a spray layer is arranged, the present application does not consume electric power, and thus has a low energy consumption and effectively reduces the operation cost.
3. The problems that a large space is required if a spray layer is arranged, the difficulty is great, the reconstruction period is long, and the initial investment and operation cost are high are solved. Reconstruction is made only based on the original absorption tower, and the external structure of the absorption tower does not need to be changed.
4. The present application has simple structure, simple operations and high system reliability.

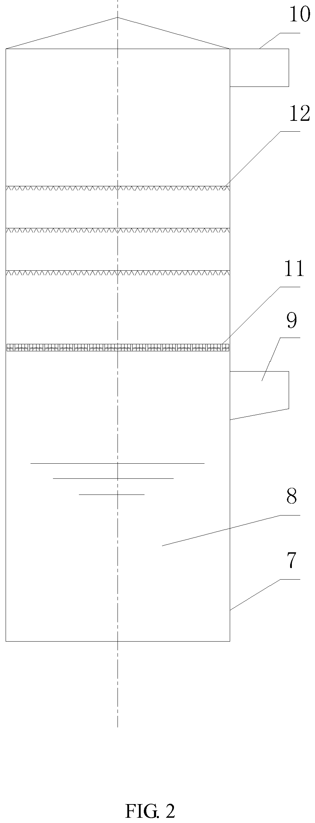

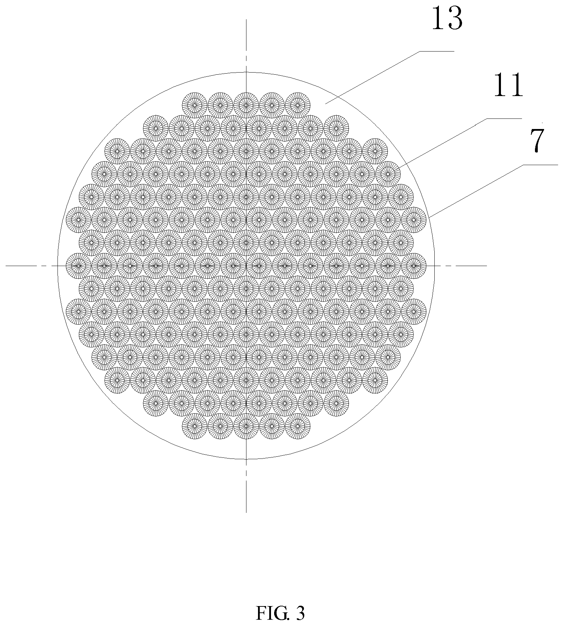

Referring to FIG. 2 and FIG. 3, the present application further provides a wet desulfurization device, comprising an absorption tower 7, an in-tower slurry pond 8, a flue gas inlet 9 and a flue gas outlet 10.

At least one dust removal and desulfurization enhancer layer 11 is installed in the wet desulfurization device, wherein the dust removal and desulfurization enhancer layer 11 comprises at least one dust removal and desulfurization enhancer.

In another specific embodiment of the present application, the wet desulfurization device further comprises a shower layer 12, and the dust removal and desulfurization enhancer layer 11 is arranged 1 to 3 meters below the shower layer 12.

In still another specific embodiment of the present application, the number of dust removal and desulfurization enhancers is determined according to a diameter of the absorption tower. Specifically, a maximum number of dust removal and desulfurization enhancers are arranged.

In still yet another specific embodiment of the present application, a gap between the dust removal and desulfurization enhancers and a gap between the dust removal and desulfurization enhancer and an inner wall of the absorption tower are sealed using a limiting and fixing bind plate 13.

Although the exemplary embodiments of the present application are described above, once knowing the basic creative concept, a person skilled in the art can make other modifications and variations to these embodiments. Therefore, the appended claims are intended to be construed as covering the preferred embodiments and all the modifications and variations falling within the scope of the present application. Obviously, a person skilled in the art can make various modifications and variations to the present application without departing from the spirit and scope of the present application. In this way, the present application is intended to cover the modifications and variations if they fall within the scope of the appended claims of the present application and equivalent technologies thereof.

## Claims

1. A dust removal and desulfurization enhancer, comprising a gas cyclone cylinder and a blind cylinder arranged inside the gas cyclone cylinder; wherein a gas cyclone blade is arranged on the blind cylinder, when flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder.

2. The dust removal and desulfurization enhancer according to claim 1, wherein the gas cyclone cylinder comprises an inner gas cyclone cylinder and an outer gas cyclone cylinder; wherein the inner gas cyclone cylinder is arranged inside the outer gas cyclone cylinder, and the blind cylinder is arranged inside the inner gas cyclone cylinder.

3. The dust removal and desulfurization enhancer according to claim 2, wherein the inner gas cyclone cylinder and the outer gas cyclone cylinder are concentrically arranged, and the blind cylinder and the inner gas cyclone cylinder are concentrically arranged.

4. The dust removal and desulfurization enhancer according to claim 3, wherein the sieve plate is adapted to at least one gas cyclone cylinder.

5. The dust removal and desulfurization enhancer according to claim 4, wherein the gas cyclone blade comprises an outer gas cyclone blade and an inner gas cyclone blade; wherein the inner gas cyclone blade is installed on the bind cylinder, the outer gas cyclone blade is installed on the inner gas cyclone cylinder, and a rotation direction when the flue gas passes through the inner gas cyclone blade is opposite to a rotation direction when the flue gas passes through the outer gas cyclone blade.

6. A wet desulfurization device, comprising an absorption tower, an in-tower slurry pond, a flue gas inlet and a flue gas outlet, **characterized in that** at least one dust removal and desulfurization enhancer layer is installed in the wet desulfurization device, the dust removal and desulfurization enhancer layer comprising at least one dust removal and desulfurization enhancer; wherein the dust removal and desulfurization enhancer comprises a gas cyclone cylinder and a blind cylinder arranged inside the gas cyclone cylinder; wherein a gas cyclone blade is arranged on the blind cylinder, when flue gas passes through the dust removal and desulfurization enhancer, gas-liquid collision and rotational flow are generated at the gas cyclone blade and on a cylinder wall of the gas cyclone cylinder, and a sieve plate with a predetermined aperture ratio is arranged above the gas cyclone cylinder, the sieve plate sealing liquid droplets within the gas cyclone cylinder.

7. The wet desulfurization device according to claim 6, wherein the gas cyclone cylinder comprises an inner gas cyclone cylinder and an outer gas cyclone cylinder; wherein the inner gas cyclone cylinder is arranged inside the outer gas cyclone cylinder, and the blind cylinder is arranged inside the inner gas cyclone cylinder.

8. The wet desulfurization device according to claim 7, wherein the inner gas cyclone cylinder and the outer gas cyclone cylinder are concentrically arranged, and the blind cylinder and the inner gas cyclone cylinder are concentrically arranged.

9. The wet desulfurization device according to claim 2, wherein the sieve plate is adapted to at least one gas cyclone cylinder.

10. The wet desulfurization device according to claim 9, wherein the gas cyclone blade comprises an outer gas cyclone blade and an inner gas cyclone blade; wherein the inner gas cyclone blade is installed on the bind cylinder, the outer gas cyclone blade is installed on the inner gas cyclone cylinder, and a rotation direction when the flue gas passes through the inner gas cyclone blade is opposite to a rotation direction when the flue gas passes through the outer gas cyclone blade.

11. The wet desulfurization device according to claim 10, wherein the wet desulfurization device further comprises a shower layer, wherein the dust removal and desulfurization enhancer is arranged 1 to 3 meters below the shower layer.

12. The wet desulfurization device according to claim 11, wherein the number of dust removal and desulfurization enhancers is determined according to a diameter of the absorption tower.

13. The wet desulfurization device according to claim 12, wherein a gap between the dust removal and desulfurization enhancers and a gap between the dust removal and desulfurization enhancer and an inner wall of the absorption tower are sealed using a limiting and fixing bind plate.
